# EUROPEAN PATENT SPECIFICATION

(11) **EP 1 571 325 B1**
(45) Date of publication and mention of the grant of the patent: **09.03.2016**
(21) Application number: 05001088.3
(22) Date of filing: 13.04.1999
(51) Int. Cl.: F02M 31/12, F02M 31/13

(54) **Modular air intake heater**
Einlasslufterhitzmodule
Chauffage modulaire destiné à une admission d'air

(30) Priority: 15.04.1998 US 60808; 02.07.1998 US 109586; 10.11.1998 US 189822
(43) Date of publication of application: 07.09.2005
(62) Divisional of application: 99918508.5
(73) Proprietor: Phillips & Temro Industries Inc., Eden Prairie, Minnesota 55344 (US)
(72) Inventor: Anderson, Chadwick P., Jordan Minnesota 55352 (US); Thimmesch, Jan P., Eden Prairie Minnesota 55346 (US)
(74) Representative: Holmes, Miles Keeton

(56) References cited:
- DE-C2- 19 515 533
- FR-A5- 2 064 487
- JP-A- H09 158 796
- NL-A- 6 601 484
- US-A- 2 427 769
- US-A- 3 912 903
- US-A- 4 082 030
- US-A- 4 463 721
- US-A- 4 667 644
- US-A- 4 685 437

## Description

### BACKGROUND OF THE INVENTION

### 1. Technical Field

This invention generally relates to an apparatus for heating the air/fuel mixture entering the cylinders of an internal combustion engine. More particularly, the invention relates to a modular electric heater adapted for mounting within an intake passage of the engine.

### 2. Discussion

The air/fuel mixture entering the cylinders of an internal combustion engine is commonly heated to increase fuel economy and responsiveness to starting as well as to decrease pollutant discharge. One type of intake heating device generally includes a pair of gaskets surrounding a heating coil or grid disposed between the carburetor and the air intake manifold as shown in U.S. Patent No. 4,020,812 to Hayward and U.S. Patent No. 4,106,454 to Henlis. The gaskets in these devices prevent air leaks into and out of the engine manifold and thermally and electrically isolate the grid from the intake structure. However, as recognized and addressed in U.S. Patent No. 5,595,164 ("the '164 Patent"), entitled "Low Profile Intake Manifold Heater", issued January 21, 1997, gasket wear or aging may eventually short the electric circuit through the heating element.

While the heater of the '164 Patent addresses the short circuiting concerns, it uses a large mounting structure that supports the heating element within the manifold. This mounting structure is expensive to ship to customers, cumbersome to work with, and requires external gaskets to seal against the manifold. In addition to the manufacturing and shipping costs associated with the mounting structure, the requisite gaskets increase the overall joint thickness and the difficulty of constructing a joint that will both seal and provide structural support to the intake system. Another example of a healer is shown in DE-19515533.

In view of the above concerns as well as manufacturers' ever present desire to reduce manufacturing costs and complexity, a need exists for a modular heater device that may be easily and inexpensively manufactured, shipped, and installed in a variety of applications.

### SUMMARY OF THE INVENTION

The present invention addresses the above identified needs by providing a modular air intake heater that includes a first holder, a second holder, a heating element coupled to the first holder and the second holder, a biasing element, and a retainer mechanism coupling the first and second holders against the urging of the biasing element. The modular heater includes a mounting assembly that facilitates use of the heater in a variety of different housings, manifolds or ducts thereby reducing the need to inventory multiple heater configurations. Many manufacturers place a high value on reducing the total number of different components they are required to maintain in inventory. Product interchangeability decreases the physical amount of space required to store components and lessens the documentation burden of tracking similar components throughout the engineering and assembly process. The mounting assembly of the modular heater reduces the overall size of the heater while the retainer mechanism maintains the heater components in a structurally secure configuration for transportation and installation.

In addition, the mounting assembly and overall heater configuration eliminates the need for additional sealing members such as gaskets within the joint connecting the intake to the engine. By removing any gaskets or flange type housings for mounting the heater element, the joint integrity and cost of the assembly is positively affected.

In another embodiment, the modular heater includes a removable access panel coupled to the intake to provide access a passage defined by the intake. Access is obtained to the passage without removing the intake from the engine. The modular heater also includes a first heater subassembly, a second heater subassembly, and a retainer mechanism coupling the first and second heater subassemblies to the access panel.

### BRIEF DESCRIPTION OF THE DRAWINGS

The various advantages of the present invention will become apparent to one skilled in the art by reading the following specification and appended claims, and by referencing the following drawings in which:
Figure 1 is a top view of the modular heater assembled and mounted to an intake manifold of an internal combustion engine;
Figure 2 is a sectional view taken at location 2-2 shown in Figure 1 and illustrating the attachment of the heater device to the intake manifold;
Figure 3 is an exploded perspective view of a first embodiment of the modular air intake heater;
Figure 4 is a perspective view of the modular heater device shown in Figure 3 assembled for shipment;
Figure 5 is an exploded view of the first holder;
Figure 6 is an exploded view of the second holder;
Figure 7 is a sectional view similar to Figure 2 illustrating a second embodiment of a heater device according to the present invention which is attached to an intake manifold;
Figure 8 is an exploded perspective view of the heater device shown in Figure 7;
Figure 9 is a elevational view of the locking grommet;
Figure 10 is a sectional view of the locking grommet taken along the line 10-10 shown in Figure 9;
Figure 11 is a sectional view taken at location 11-11 shown in Figure 12 illustrating a third embodiment of a modular heater device according to the present invention which is attached to an access panel;
Figure 12 is an elevational view of the third embodiment of the heater device of the present invention; and
Figure 13 is an exploded view of the third embodiment of the heater device.

### DETAILED DESCRIPTION OF THE PREFERRED EMBODIMENTS

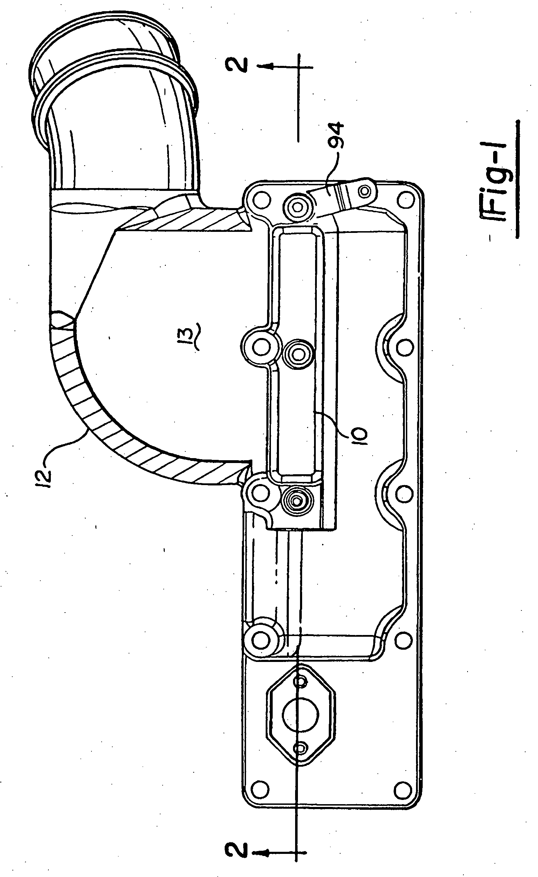

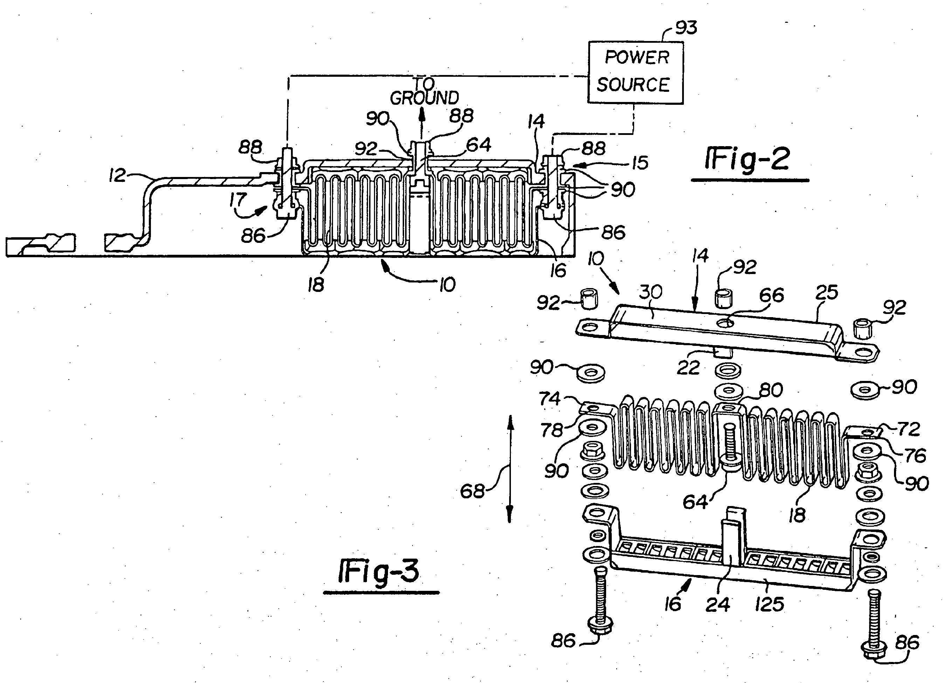

With reference to Figures 1 and 2, a first embodiment of the modular air intake heater 10 of the present invention is connectable to an intake 12 of an internal combustion engine in communication with a passage 13 (Figure 1) of intake 12. As will be described in greater detail hereinafter, a coupling assembly 15 (Figure 2) couples the heater 10 to the intake 12 at predetermined discrete points. The coupling assembly is electrically and thermally isolated from the intake in a manner generally known in the art.

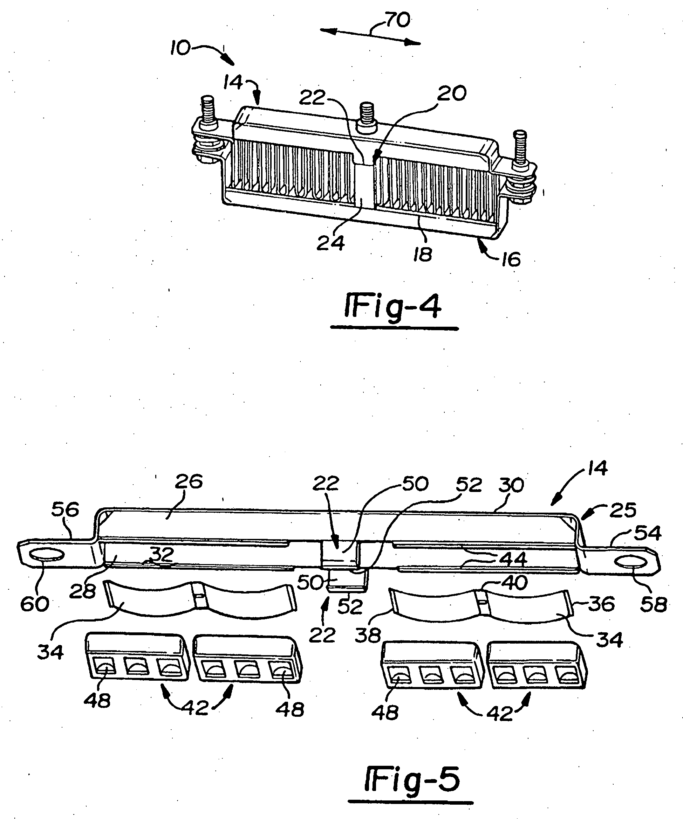

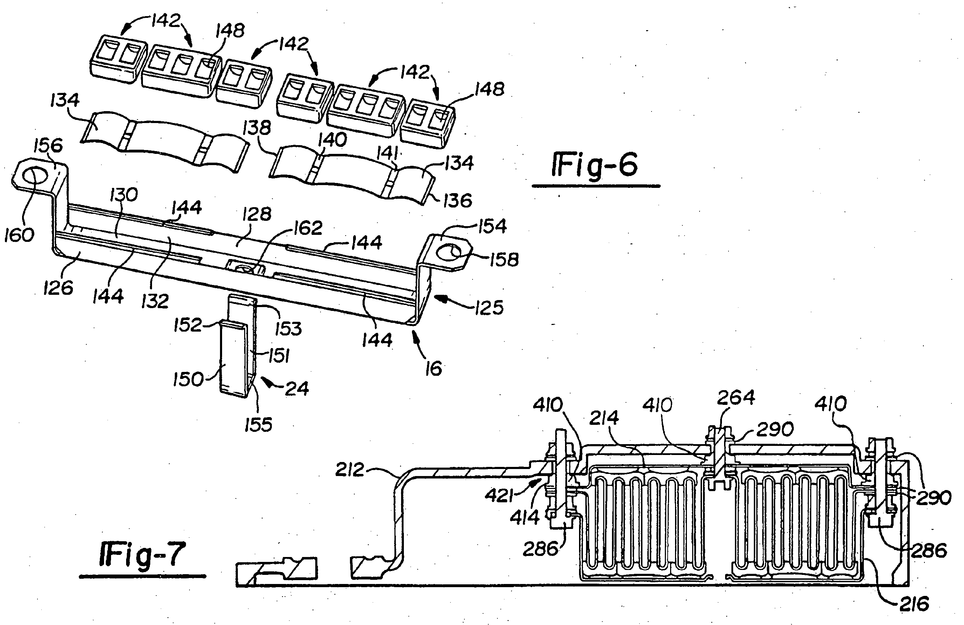

As best illustrated in Figures 2-4, heater 10 includes a first holder 14, a second holder 16, and a serpentine heater element 18. Figures 2-6 depict a first embodiment of a retainer mechanism 20 coupling first holder 14 to second holder 16 against the biasing force of a biasing element such as wave springs 34 and 134 shown in Figures 5 and 6, respectively. Retainer mechanism 20 (Figure 4) couples first and second holders 14 and 16 to each other against the biasing force of a biasing element such as wave springs 34 and 134 shown in Figures 5 and 6, respectively, and described in detail hereinafter.

With reference to Figures 3 and 4, retainer mechanism 20 includes a first set of clip tabs 22 and a second clip tab 24. Second clip tab 24 is configured to engage first set of clip tabs 22 (Figure 5) in a snap-fit coupling that is also described in detail below. The snap-fit coupling securely retains heater element 18 between first and second holders 14 and 16 as shown in Figure 4. The structural configuration of modular heater 10 provides numerous advantages over the prior art including ease of shipment as the heater is modular in the sense that it does not require a large or complex mounting frame to securely intercouple the heater elements for shipment nor to secure the modular heater to the engine for operation. Additionally, the retainer mechanism 20 of the present invention withstands the harsh temperature and vibrational environment within an internal combustion engine.

Turning now to Figures 5 and 6, the structural configuration and engagement of first holder 14, second holder 16, and retainer mechanism 20 will be described in detail. As shown in Figure 5, first holder 14 includes a housing 25 preferably stamped from a stainless steel sheet. Housing 25 defines a "C" shaped channel 32 bounded on three sides by opposed side walls 26 and 28 and end wall 30.

Wave springs 34, also preferably formed of stainless steel, are disposable within channel 32 to engage end wall 30 at ends 36 and 38 as well as a center recess 40. Thermal and electric insulators 42 are also disposable within channel 32 to engage and capture springs 34 between end wall 30 and insulators 42. Those skilled in the art will appreciate that springs 34 urge insulators 42 away from end wall 30 and into engagement with stops 44 which extend inwardly into channel 32 from side walls 26 and 28. Insulators 42 include cavities 48 to accommodate and position heating element 18 therewithin. It is contemplated that insulators may be formed of a ceramic material known in the art to provide the desired thermal and electrical insulating properties.

First clip tabs 22 are illustrated in Figure 5 to include a body 50 integral with one of side walls 26 and 28 and a catch 52 at the terminal end of body 50. Catches 52 extend inwardly toward channel 32 from body 50 as shown in Figure 5. As will be described in detail below, catches 52 are configured and positioned for snap-fit engagement with outwardly extending catches formed on second tab 24.

Heater 10 includes a mounting assembly 17 (Figure 2) cooperative with coupling assembly 15 for connecting the modular heater 10 to the manifold 12 of the internal combustion engine. More specifically, first holder 14 includes side flanges 54 and 56 having apertures 58 and 60 formed therein to accommodate bolt connections to manifold 12 as hereinafter described with reference to Figures 1 and 2. A similar flange and aperture configuration is provided in second holder 16 and heating element 18 as is described below.

As shown in Figure 6, second holder 16 is configured substantially the same as first holder 14 with the exception of second tab 24. Accordingly, the components of second holder 16 are referred to herein by numerals increased by one hundred relative to the numbers used to describe first holder 14. For completeness, it is noted that springs 134 of second holder 16 include a pair of recesses 140 and 141 that engage end wall 130 of housing 125. Other than the configuration of springs 134 and the below described configuration of second tab 24, those skilled in the art will appreciate that the configuration and interrelation of side walls 126 and 128, channel 132, wave springs 134, insulators 142, stops 144, cavities 148, flanges 154 and 156, and apertures 158 and 160 are substantially the same as the corresponding components described above with reference to Figure 5.

Second clip tab 24 is a stainless steel tab member shaped to generally conform to the configuration of housing 125 and includes opposed legs 150 and 151 extending upwardly from a bottom plate 155. The terminal end of each leg 150 and 151 includes an outwardly extending catch 152 and 153, respectively. Those skilled in the art will appreciate that the second clip tab 24 may be formed or stamped integral with housing 125 or connected thereto via a spot weld, rivet, bolt, or other connection known in the art such as at opening 162 in end wall 130.

To assemble modular heater 10, first holder 14 and second holder 16 are configured as shown in Figures 5 and 6, respectively, and heating element 18 is properly positioned relative to first holder 14 by seating within insulator cavities 48. A bolt 64, with appropriate insulators such as a washer 90 and sleeve 92, is disposed through apertures 80 and 66 and heating element 18 is seated in cavities 148 of second holder 16. An external force is then supplied to displace first holder 14 toward second holder 16 i.e., along the axis defined by arrow 68 (Figure 3), thereby compressing wave springs 34 and 134. Legs 150 and 151 of second tab 24 are displaced toward one another to allow the catches 152 and 153 thereof to pass catches 52 of first clip tab 22. Legs 150 and 151 are then released and the forces of wave springs 34 and 134 are allowed to urge the respective catches into engagement.

Modular heater 10 may now be handled and/or shipped separately to an end user without additional assembly steps required. The shape of the catches 52, 152, and 153 allows movement of first holder 14 relative to second holder 16 in the direction of arrow 70 (Figure 4) but restricts movement of the holders away from one another along the axis of arrow 68 (Figure 3). This float provides the assembler an extra degree of freedom for alignment of apertures 58 and 60 with apertures 158 and 160 of second holder 16 or other features such as the mounting holes formed within intake manifold 12. It is preferred that bolts 86, with appropriate insulating sleeves 92 and washers 90, are positioned as shown in Figures 3 and 4 and hereinafter described so as to further simplify the later connection of heater 10 to manifold 12.

Those skilled in the art will appreciate that while the retainer mechanism 20 is illustrated and described herein as including first and second clip tabs 22 and 24, other coupling components generally known in the art may be used with the present invention. More particularly, it is contemplated that the retention function may be performed or supplemented through the use of straps or binders disposed about selected portions of the heater 10.

For completeness and in reference to Figure 3, it should be noted that serpentine heater element 18 includes a center aperture 80 as well as end tabs 72 and 74 each with apertures 76 and 78, respectively. These tabs and apertures form part of the mounting structure of heater 10 which, in the preferred embodiment illustrated and described herein, cooperates with the bolt connectors of coupling assembly 15 as is most clearly illustrated in Figure 2. Those skilled in the art will appreciate that heating element 18 is formed of an electrically resistant material that generates heat when connected to a power source as hereinafter described.

As best seen in Figures 1 and 2, modular heater 10 is connectable to intake manifold 12 through coupling assembly 15. Because the function of modular heater 10 is based on electrical resistance within heater element 18, coupling assembly 15 includes bolts 86, nuts 88 insulating washers 90 and sleeves 92 to avoid shorting the circuit. As shown in Figure 2, each of bolts 86 is electrically connected to a power source 93 for communicating current to heating element 18. The bolt 86, nut 88, and heating element 18 are electrically isolated from manifold 12 and first and second holders 14 and 16, respectively, by the selective placement of insulating washers 90 and sleeve 92. Those skilled in the art will appreciate that a variety of insulators generally known in the art may be used in numerous configurations to properly isolate the current from potential sources of short circuiting. Bolt 64 is electrically connected to ground to complete the electric circuits through heating element 18. Those skilled in the art will appreciate that while a specific current configuration is illustrated in Figure 2, the electrical connections between the heating element, power source, and ground may be modified without departing from the scope of the invention as defined by the appended claims. Those skilled in the art should also appreciate that a jumper bar 94 such as that illustrated in Figure 1 may be used to simplify the ease of electrical connection of the heating element to the power source. Similarly, as shown in Figure 7, the coupling components of modular heater 210 are insulated from manifold housing 212 by selective placement of insulating washers 290 and locking grommets 410.

It should be appreciated from the above description that the modular heater of the present invention does not negatively impact the integrity of the mechanical joint between intake manifold 12 and the engine due to additional gaskets, flanges, or heating elements that may shift, compress or wear over time. Secondly, an assembler installing modular heater 10 need not be concerned with handling or assembling multiple individual heater components. Rather, heater 10 can be secured to intake manifold 212 through the use of a threaded nut 88 with an appropriate insulating washer 90.

Figure 7 depicts a second embodiment of the modular heater device 210 attached to intake manifold 12. The function and components of this embodiment are generally the same as those previously described with reference to Figures 1-6. Accordingly, those skilled in the art will appreciate that modular heating device 210 provides the advantages discussed herein. For clarity, similar components are labeled with like numerals increased by 200.

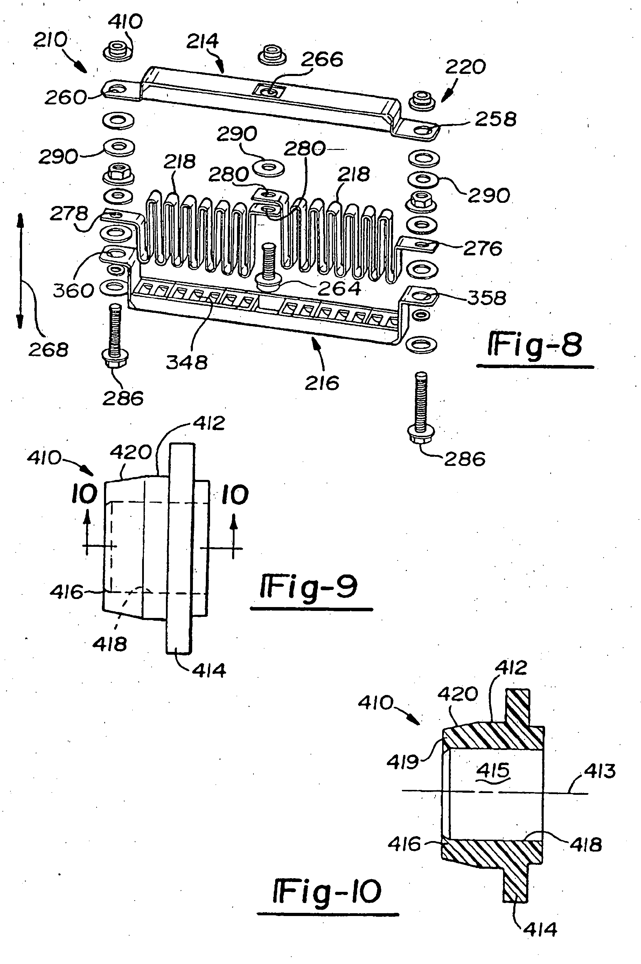

As shown in Figure 8, modular heater 210 includes a retainer mechanism 220 having three locking grommets 410 constructed from a resilient insulating material such as teflon. Locking grommets 410 are each configured to engage bolts 264 and 286 in a snap-fit coupling that retains heater element 218 between first and second holders 214 and 216. As shown in Figures 9 and 10, each locking grommet 410 includes a cylindrical sleeve 412 formed about a grommet axis 413 (Figure 10) to form a passage 415, a flange 414 extending radially outward from sleeve 412, and a barb 416 circumscribing passage 415. It will be appreciated that passage 415 is sized to accommodate one of bolts 286 and 264 while barb 416 protrudes inwardly from an inner surface 418 of sleeve 412 proximate to a rear face 419 thereof to effectively reduce the size of passage 415 to a dimension less than the outer diameter of bolts 264 and 286.

Modular heater 210 is illustrated in its assembled state in Figure 7. From this description and the appended drawings, it will be appreciated that the assembly of modular heater 210 is similar to that described above with reference to Figures 1-6. However, after positioning holders 214 and 216 relative to heating element 218 and arranging the various washers, nuts, and bolts as described, locking grommets 410 are positioned over bolts 264 and 286 and axially displaced along the bolts toward heating element 218 until flange 414 contacts first holder 214. As locking grommets 410 are displaced, barb 416 is compressed and/or urged radially outward allowing the barb to pass at least one thread of bolts 264 and 286. Once assembled, the wave springs urge holders 214 and 216 away from one another. This biasing force is resisted by the engagement of barb 416 with the thread of bolts 264 and 286. It should be appreciated that the term thread as used herein encompasses standard pitched threads as well as ribs or cylindrical grooves that may function to lockingly engage barb 416.

A chamfer 420 is provided along the exterior surface of sleeve 412 to facilitate positioning of locking grommet 410 within housing 212. As shown in Figure 7, sleeve 412 is sized such that it will engage housing 212. Accordingly, upon connection of modular heater 210 to housing 212, the resiliency of locking grommet 410 allows the grommet to compress during assembly to form a nonconductive seal area 421 between heater 210 and housing 212.

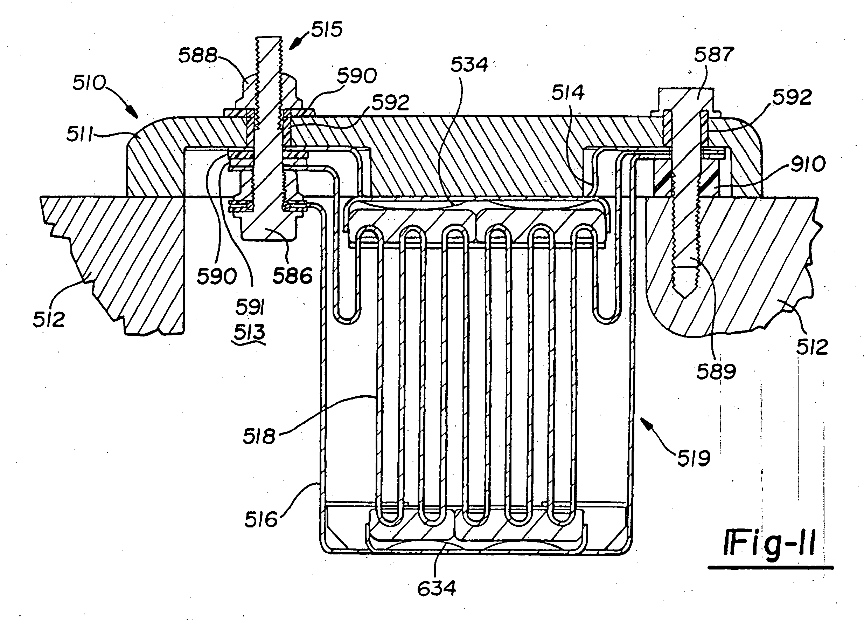

Figure 11 depicts a third embodiment of the modular heater device 510 attached to an access panel 511 of intake 512. Unlike the first and second embodiments previously described, removal of access panel 511 provides access to passage 513 without requiring removal of intake 512 from the vehicle engine. However, the function and components of this heater embodiment are generally the same as those previously described with reference to Figures 1-10. Accordingly, those skilled in the art will appreciate that modular heating device 510 provides the advantages previously discussed herein. In addition, heating device 510 provides the further advantage of allowing an end user to install the heater after the intake has been assembled to a vehicle increasing serviceability and ease of installation. For clarity, similar components are labeled with like numerals increased by five hundred.

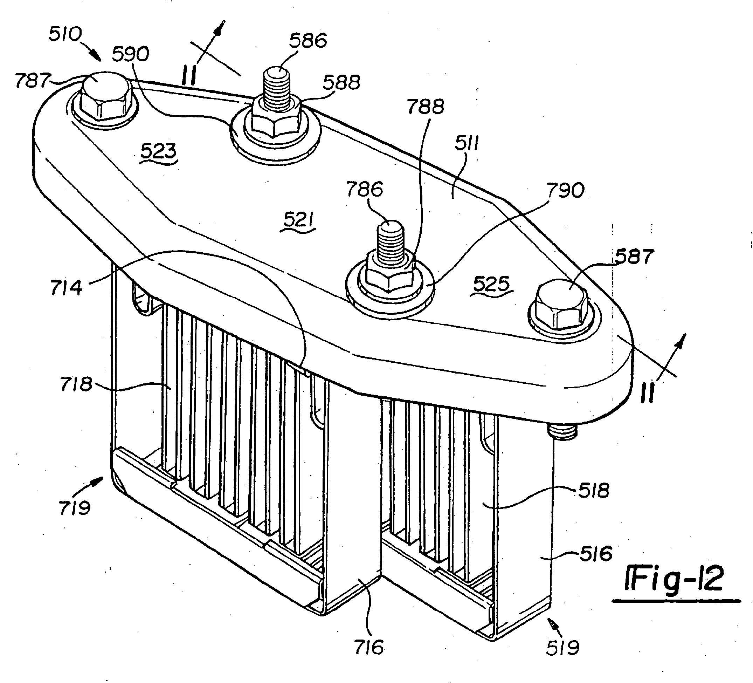

As shown in Figure 12, modular heater 510 includes two heater subassemblies 519 and 719 mounted to access panel 511 in an offset manner to facilitate heat transfer and packaging requirements. By mounting two heater subassemblies as shown, the desired wattage input per square inch of packaging space was achieved. In addition, the offset positioning of the heater subassemblies encourages heat transfer enhancing turbulent air flow. One skilled in the art will appreciate that heater subassembly 719 is identical to heater subassembly 519 simply rotated 180 degrees thereto.

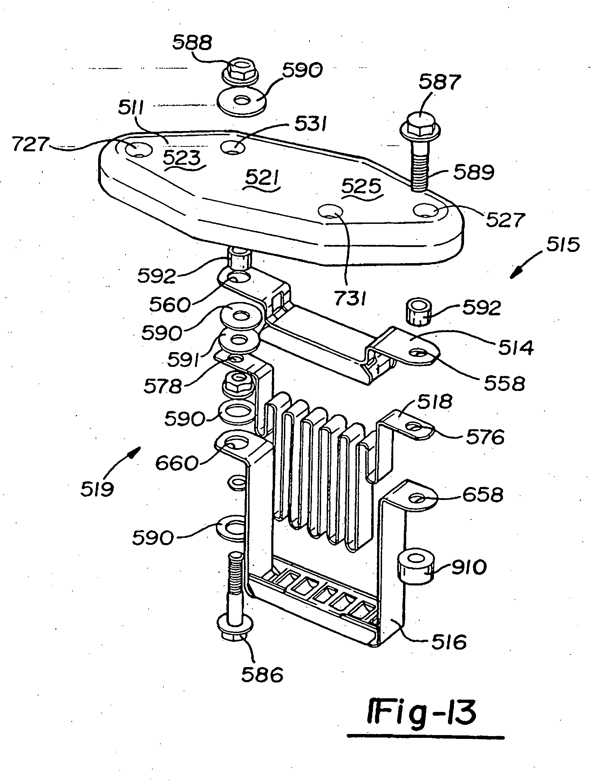

Figure 13 is a partial exploded view of heater 510 illustrating one of the two identical heater subassemblies. From this description and the appended drawings, one skilled in the art will appreciate that the assembly of heater subassembly 519 is similar to that described above with reference to Figures 1-10. However, retainer mechanism 515 secures heater subassembly 519 to access panel 511 in a unique manner.

Access panel 511 is ellipsoidal in shape and includes a center section 521 having four inner corners and two triangular end sections, 523 and 525, each having vertices. Access panel 511 further includes apertures 527 and 727 located at the vertices and another pair of apertures 531 and 731 located at opposing corners of center section 521. One skilled in the art will appreciate that intake system component geometry may vary per application. Factors including engine size, fresh air routing and the available packaging envelope define the size and shape of intake 512. Accordingly, access panel 511 may be alternatively shaped to conform with an intake system not depicted in the Figures.

In cooperation with access panel apertures 527 and 531, retainer mechanism 515 includes first attachment bolt 586, second attachment bolt 587, locking grommet 910, insulating sleeves 592, conductive washers 591, and insulating washers 590. In similar fashion to that shown in Figures 1-6, bolt 586 is displaced through apertures 660, 578, 560, and 531 to couple a first end of heater subassembly 519 to access panel 511 against the urging of wave springs 534 and 634 (Figure 11). One skilled in the art will note that attachment bolt 586 is mechanically coupled but electrically insulated from access panel 511 through the selective placement of insulating sleeves 592, conductive washers 591, and insulating washers 590. The threaded end of attachment bolt 586 protrudes past access panel 511 and nut 588 in order to provide a point of electrical connection to an external power source previously described.

Second attachment bolt 587, in cooperation with locking grommet 910, couples a second end of heater subassembly 519 to access panel 511 against the urging of wave springs 534 and 634 in a manner sufficient for transportation of heater 510 to a service warehouse or assembly facility. Specifically, attachment bolt 587 is disposed through apertures 527, 558, 576, and 658 in a direction opposite to bolt 586 providing an exposed threaded portion 589 of bolt 587 for engagement with both locking grommet 910 and intake 512 as shown in Figure 11. In a similar manner to that described with reference to Figures 7-10, locking grommet 910 engages bolt 587 in a snap-fit coupling that retains heater element 518 between first holder 514 and second holder 516. Accordingly, locking grommet 910 secures the second end of heater subassembly 519 to access panel 511.

Referring to Figure 12, heater subassembly 719 includes components similar to those described in reference to heater subassembly 519 and like components have been labeled with reference numerals increased by 200. Specifically heater subassembly 719 includes first holder 714, second holder 716, heating element 718, first attachment bolt 786, second attachment bolt 787, and insulating washers 790. Heater subassembly 719 is coupled to access panel 511 in a similar manner to that previously described in reference to heater subassembly 519. One skilled in the art will appreciate the heater subassembly 719 is rotated 180 degrees relative to heater subassembly 519 in order to position attachment bolts 587 and 787 a maximum distance apart while bolts 586 and 786 are minimally spaced. Such positioning provides peripheral attachment points on access panel 511 for mounting modular heater 510 to intake 512 while the close proximity of bolts 586 and 786 simplify the electrical connection to an external power supply.

Once both heater subassemblies 519 and 719 are mounted to access panel 511, assembly of modular heater 510 to intake 512 is accomplished by simply dropping heater 510 into air passage 513 and coupling access panel 511 to intake 512 via attachment bolts 586 and 786. One skilled in the art will appreciate that a gasket or other sealant may be used to seal the joint between access panel 511 and intake 512.

For clarity, the electrical current paths provided in the third embodiment of modular heater 510 will be described. Each heater subassembly 519 and 719 includes a separate electrical circuit for generating heat. As illustrated in Figure 11, second attachment bolt 587 is electrically connected to access panel 511 and intake 512 which are in turn electrically connected to vehicle ground. Bolt 587 is also electrically coupled to one end of heating element 518. Bolt 586 is electrically coupled to the opposite end of heating element 518 and electrically insulated from first holder 514, second holder 516, and access panel 511. One skilled in the art will appreciate that the components of second heater subassembly 719 are similarly electrically coupled. Accordingly, and in order to generate heat from each of heating elements 518 and 718, each of bolts 586 and 686 are electrically connected to an external power source.

The foregoing discussion discloses and describes three exemplary embodiments of the present invention.

## Claims

1. A heating device for use in an internal combustion engine, the heating device comprising:
a first holder (14, 214, 514) having a passage;
a second holder (16, 216, 516) having a passage;
said first and second holders (14, 16, 214, 216, 514, 516) having a C-shaped cross section housing (25, 215);
a heating element (18, 218, 518) positioned between said first and second holders (14, 16, 214, 216, 514, 516); and
a retainer mechanism (20, 220, 515) coupling said first holder (14, 214, 514) and said second holder (16, 216, 516) and retaining said heating element (18, 218, 518) therebetween, said retainer mechanism (20, 220, 515) including at least two fasteners (264, 286, 586, 587) disposed in said passages of said first and second holders (14, 16, 214, 216, 514, 516) and a locking grommet (410, 910) engaging at least one fastener of said at least two fasteners (264, 286, 586, 587) in a snap-fit coupling.

2. The heating device of claim 1 further including biasing means for urging one of said first holder (14, 214, 514) and said second holder (16, 216, 516) away from the other of said first holder (14, 214, 514) and said second holder (16, 216, 516).

3. The heating device of claim 2 wherein said first holder (14, 214, 514) includes a housing defining a channel and a stop, said heating device further including an insulator in said channel, said biasing means urging said insulator against said stop.

4. The heating device of claim 1 wherein said retainer mechanism (20, 220, 515) is adapted to removably couple the heating device to the engine.

5. The heating device of claim 1 wherein the locking grommet (410, 910) includes a sleeve (412) having an inner surface defining a sleeve passage (415), said locking grommet (410, 910) having a barb (416) projecting inwardly from the inner surface of the sleeve (412), and wherein the fastener (264, 286, 586, 587) includes a thread, said fastener (264, 286, 586, 587) being disposed in said sleeve passage such that the barb of the locking grommet (410, 910) engages the thread of the fastener (264, 286, 586, 587) to couple the first holder (14, 214, 514) to the second holder (16, 216, 516).

6. The heating device of claim 1 wherein one of the first and second holders (14, 16, 214, 216, 514, 516) is an access panel removably mounted to an intake defining a duct with an opening, the access panel closing the opening, the heating element (18, 218, 518) being positioned in heat transfer relation with the duct to thereby heat combustion air flowing through the duct.

7. The heating device of claim 1 wherein the locking grommet (410, 910) is constructed from an elastomeric material that compresses and sealingly engages a component of the engine.

8. The heating device of claim 1 wherein the locking grommet (410, 910) includes a sleeve (412) and a flange (414) radially outwardly extending from the sleeve, the flange restricting movement of the sleeve (412) through the passages.

9. A method for constructing a heating device, the method comprising:
obtaining a first holder (14, 214, 514) having a first passage, a second holder (16, 216, 516) having a second passage, a locking grommet (410, 910) having a heating element (18, 218, 518);
positioning said heating element (18, 218, 518) between said first and second holders (14, 16, 214, 216, 514, 516); and
axially disposing at least two fasteners (264, 286, 586, 587) within said first passage, said second passage to interconnect said first holder (14, 214, 514) and said second holder (16, 216, 516), wherein at least one fastener of said at least two fasteners (264, 286, 586, 587) and said locking grommet (410, 910) are operable to be secured to one another without necessity of rotation.

10. The method of claim 9 further including displacing one of said first holder (14, 214, 514) and said second holder (16, 216, 516) toward the other of said first holder (14, 214, 514) and second holder (16, 216, 516) against the urging of a spring (34, 134).

11. The method of claim 10 further including compressing the locking grommet (410, 910) in sealing engagement with a component of an engine to which the heating device is being attached.

12. The method of claim 9 wherein said fastener (264, 286, 586, 587) includes a threaded bolt and said locking grommet (410, 910) defines a passage (415) having a barb (416) projecting inwardly into said grommet passage (415), and wherein the step of axially disposing said fastener (264, 286, 586, 587) within a sleeve (412) includes displacing said bolt (286, 267) within the grommet passage (415) such that said barb (416) engages said bolt (286, 267).

## Patentansprüche

1. Heizvorrichtung für den Einsatz in einem Verbrennungsmotor, wobei die Heizvorrichtung Folgendes aufweist:
einen ersten Halter (14, 214, 514), aufweisend einen Durchgang;
einen zweiten Halter (16, 216, 516), aufweisend einen Durchgang;
wobei die ersten und zweiten Halter (14, 16, 214, 216, 514, 516) ein Gehäuse (25, 215) mit C-förmigem Querschnitt aufweist;
ein Heizelement (18, 218, 518), positioniert zwischen den ersten und zweiten Haltern (14, 16, 214, 216, 514, 516), aufweist; und
einen Rückhaltemechanismus (20, 220, 515) aufweist, der den ersten Halter (14, 214, 514) und den zweiten Halter (16, 216, 516) und dazwischen das Heizelement (18, 218, 518) miteinander verbindet, wobei der Rückhaltemechanismus (20, 220, 515) mindestens zwei Verriegelungen (264, 286, 586, 587) aufweist, die in den Durchgängen der ersten und zweiten Halter (14, 16, 214, 216, 514, 516) angeordnet sind, und eine Sicherungstülle (410, 910), die mit mindestens einer Verriegelung der zwei Verriegelungen (264, 286, 586, 587) in einer Schnappkupplung im Eingriff ist.

2. Heizvorrichtung nach Anspruch 1, ferner aufweisend Vorspannmittel, um den einen des ersten Halters (14, 214, 514) und zweiten Halters (16, 216, 516) von dem anderen des ersten Halters (14, 214, 514) und zweiten Halters (16, 216, 516) weg zu spannen.

3. Heizvorrichtung nach Anspruch 2, wobei der erste Halter (14, 214, 514) ein Gehäuse aufweist, das einen Kanal und einen Anschlag definiert, wobei die Heizvorrichtung ferner einen Isolator in dem Kanal umfasst, wobei die Vorspannmittel den Isolator gegen den Anschlag drücken.

4. Heizvorrichtung nach Anspruch 1, wobei der Rückhaltemechanismus (20, 220, 515) für ein abnehmbares Befestigen der Heizvorrichtung am Motor angepasst ist.

5. Heizvorrichtung nach Anspruch 1, wobei die Sicherungstülle (410, 910) eine Hülse (412) umfasst, die eine innere, einen Hülsendurchgang (415) definierende Fläche aufweist, wobei die Sicherungstülle (410, 910) einen von der inneren Fläche der Hülse (412) nach innen vorstehenden Widerhaken (416) aufweist, und wobei die Verriegelung (264, 286, 586, 587) ein Gewinde umfasst, wobei die Verriegelung (264, 286, 586, 587) derart im Hülsendurchgang angeordnet ist, dass der Widerhaken der Sicherungstülle (410, 910) mit dem Gewinde der Verriegelung (264, 286, 586, 587) in Eingriff geht, um den ersten Halter (14, 214, 514) an den zweiten Halter (16, 216, 516) zu kuppeln.

6. Heizvorrichtung nach Anspruch 1, wobei einer der ersten und zweiten Halter (14, 16, 214, 216, 514, 516) eine Zugangstafel ist, die abnehmbar auf einem einen Kanal definierenden Einlass mit einer Öffnung befestigt ist, wobei das Heizelement (18, 218, 518) in einem Wärme übertragenden Verhältnis zum Kanal angeordnet ist, um dadurch durch den Kanal strömende Verbrennungsluft zu erhitzen.

7. Heizvorrichtung nach Anspruch 1, wobei die Sicherungstülle (410, 910) aus einem elastomeren Werkstoff hergestellt ist, der zusammendrückend und abdichtend mit einem Bauteil des Motors im Eingriff ist.

8. Heizvorrichtung nach Anspruch 1, wobei die Sicherungstülle (410, 910) eine Hülse (412) und einen sich von der Hülse aus radial nach außen erstreckenden Flansch (414) aufweist, der die Bewegung der Hülse (412) durch die Durchgänge begrenzt.

9. Verfahren zum Konstruieren einer Heizvorrichtung, wobei das Verfahren Folgendes aufweist:
Beschaffen eines ersten Halters (14, 214, 514), aufweisend einen ersten Durchgang, eines zweiten Halters (16, 216, 516), aufweisend einen zweiten Durchgang, eine Sicherungstülle (410, 910), aufweisend ein Heizelement (18, 218, 518);
Positionieren des Heizelements (18, 218, 518) zwischen den ersten und zweiten Haltern (14, 16, 214, 216, 514, 516); und
axiales Anordnen von mindestens zwei Verriegelungen (264, 286, 586, 587) innerhalb des ersten Durchgangs, des zweiten Durchgangs zum Verbinden des ersten Halters (14, 214, 514) und des zweiten Halters (16, 216, 516), wobei die mindestens eine Verriegelung der zwei Verriegelungen (264, 286, 586, 587) und die Sicherungstülle (410, 910) operabel sind, um ohne die Notwendigkeit einer Drehung gesichert zu werden.

10. Verfahren nach Anspruch 9, ferner aufweisend Verschieben eines des ersten Halters (14, 214, 514) und des zweiten Halters (16, 216, 516) in Richtung zum anderen des ersten Halters (14, 214, 514) und des zweiten Halters (16, 216, 516) gegen den Druck einer Feder (34, 134).

11. Verfahren nach Anspruch 10, ferner aufweisend Zusammendrücken der Sicherungstülle (410, 910) in abdichtenden Eingriff mit einem Bauteil eins Motors, an dem die Heizvorrichtung angebracht wird.

12. Verfahren nach Anspruch 9, wobei die Verriegelung (264, 286, 586, 587) einen Gewindebolzen aufweist und die Sicherungstülle (410, 910) einen Durchgang (415) mit einem nach innen in den Tüllendurchgang (415) vorstehenden Widerhaken (416) aufweist, und wobei der Schritt des axialen Verschiebens der Verriegelung (264, 286, 586, 587) innerhalb einer Hülse (412) ein Verschieben des Bolzens (286, 267) innerhalb des Tüllendurchgangs (415) auf solche Weise umfasst, dass der Widerhaken (416) mit dem Bolzen (286, 267) in Eingriff geht.

## Revendications

1. Dispositif de chauffage destiné à être utilisé dans un moteur à combustion interne, le dispositif de chauffage comprenant :
un premier support (14, 214, 514) ayant un passage ;
un deuxième support (16, 216, 516) ayant un passage ;
lesdits premier et deuxième supports (14, 16, 214, 216, 514, 516) ayant un logement à coupe transversale en forme de C (25, 215) ;
un élément chauffant (18, 218, 518) positionné entre lesdits premier et deuxième supports (14, 16, 214, 216, 514, 516) ; et
un mécanisme de retenue (20, 220, 515) couplant ledit premier support (14, 214, 514) et ledit deuxième support (16, 216, 516) et retenant ledit élément chauffant (18, 218, 518) entre les deux, ledit mécanisme de retenue (20, 220, 515) comportant au moins deux éléments de fixation (264, 286, 586, 587) disposés dans lesdits passages desdits premier et deuxième supports (14, 16, 214, 216, 514, 516) et une rondelle de verrouillage (410, 910) venant en prise avec au moins un élément de fixation desdits au moins deux éléments de fixation (264, 286, 586, 587) dans un couplage à encliquetage.

2. Dispositif de chauffage de la revendication 1, comportant en outre un moyen de sollicitation destiné à pousser l'un parmi ledit premier support (14, 214, 514) et ledit deuxième support (16, 216, 516) loin de l'autre parmi ledit premier support (14, 214, 514) et ledit deuxième support (16, 216, 516).

3. Dispositif de chauffage de la revendication 2, dans lequel ledit premier support (14, 214, 514) comporte un boîtier définissant un canal et une butée, ledit dispositif de chauffage comportant en outre un isolant dans ledit canal, ledit moyen de sollicitation poussant ledit isolant contre ladite butée.

4. Dispositif de chauffage de la revendication 1, dans lequel ledit mécanisme de retenue (20, 220, 515) est adapté pour coupler, de façon amovible, le dispositif de chauffage au moteur.

5. Dispositif de chauffage de la revendication 1, dans lequel la rondelle de verrouillage (410, 910) comporte un manchon (412) ayant une surface intérieure définissant un passage de manchon (415), ladite rondelle de verrouillage (410, 910) ayant une arête (416) faisant saillie vers l'intérieur depuis la surface intérieure du manchon (412), et dans lequel l'élément de fixation (264, 286, 586, 587) comporte un filetage, ledit élément de fixation (264, 286, 586, 587) étant disposé dans ledit passage de manchon de sorte que l'arête de la rondelle de verrouillage (410, 910) vienne en prise avec le filetage de l'élément de fixation (264, 286, 586, 587) pour coupler le premier support (14, 214, 514) au deuxième support (16, 216, 516).

6. Dispositif de chauffage de la revendication 1, dans lequel l'un des premier et deuxième supports (14, 16, 214, 216, 514, 516) est un panneau d'accès monté de façon amovible à une entrée définissant un conduit avec une ouverture, le panneau d'accès fermant l'ouverture, l'élément chauffant (18, 218, 518) étant positionné en relation de transfert thermique avec le conduit pour chauffer ainsi l'air de combustion circulant à travers le conduit.

7. Dispositif de chauffage de la revendication 1, dans lequel la rondelle de verrouillage (410, 910) est construite d'un matériau élastomère qui comprime un composant du moteur et vient en prise de manière étanche avec celui-ci.

8. Dispositif de chauffage de la revendication 1, dans lequel la rondelle de verrouillage (410, 910) comporte un manchon (412) et une bride (414) s'étendant radialement vers l'extérieur à partir du manchon, la bride limitant le mouvement du manchon (412) à travers les passages.

9. Procédé de construction d'un dispositif de chauffage, le procédé comprenant le fait :
d'obtenir un premier support (14, 214, 514) ayant un premier passage, un deuxième support (16, 216, 516) ayant un deuxième passage, une rondelle de verrouillage (410, 910) ayant un élément chauffant (18, 218, 518) ;
de positionner ledit élément chauffant (18, 218, 518) entre lesdits premier et deuxième supports (14, 16, 214, 216, 514, 516) ; et
de disposer axialement au moins deux éléments de fixation (264, 286, 586, 587) à l'intérieur dudit premier passage, dudit deuxième passage pour relier ledit premier support (14, 214, 514) et ledit deuxième support (16, 216, 516) entre eux, où au moins un élément de fixation desdits au moins deux éléments de fixation (264, 286, 586, 587) et ladite rondelle de verrouillage (410, 910) peuvent être actionnés de manière à être fixés l'un(e) à l'autre sans nécessité de rotation.

10. Procédé de la revendication 9, comportant en outre le déplacement de l'un parmi ledit premier support (14, 214, 514) et ledit deuxième support (16, 216, 516) vers l'autre desdits premier support (14, 214, 514) et deuxième support (16, 216, 516) contre la poussée d'un ressort (34, 134).

11. Procédé de la revendication 10, comportant en outre le fait de comprimer la rondelle de verrouillage (410, 910) dans un contact étanche avec un composant d'un moteur auquel le dispositif de chauffage est attaché.

12. Procédé de la revendication 9, dans lequel ledit élément de fixation (264, 286, 586, 587) comporte un boulon fileté et ladite rondelle de verrouillage (410, 910) définit un passage (415) ayant une arête (416) faisant saillie vers l'intérieur dans ledit passage (415) de rondelle, et dans lequel l'étape consistant à disposer axialement ledit élément de fixation (264, 286, 586, 587) à l'intérieur d'un manchon (412) comporte le fait de déplacer ledit boulon (286, 267) à l'intérieur du passage (415) de rondelle de sorte que ladite arête (416) vienne en prise avec ledit boulon (286, 267).
